(19) Europäisches Patentamt
European Patent Office
Office européen des brevets

(11) EP 0 783 019 B1

(12) EUROPÄISCHE PATENTSCHRIFT

(45) Veröffentlichungstag und Bekanntmachung des Hinweises auf die Patenterteilung:
**13.02.2002 Patentblatt 2002/07**

(51) Int Cl.[7]: **C08K 3/30**, A61K 49/04

(21) Anmeldenummer: **96118830.7**

(22) Anmeldetag: **25.11.1996**

(54) **Thermoplastische Massen mit verbessertem Röntgenkontrast**

Thermoplastic compositions with improved X-ray contrast

Compositions thermoplastiques à contraste aux rayons X amélioré

(84) Benannte Vertragsstaaten:
**BE DE ES FR GB IT NL**

(30) Priorität: **05.12.1995 DE 19545289**

(43) Veröffentlichungstag der Anmeldung:
**09.07.1997 Patentblatt 1997/28**

(73) Patentinhaber: **BAYER AG**
**51368 Leverkusen (DE)**

(72) Erfinder:
- **Bödiger, Michael, Dr.**
  **41539 Dormagen (DE)**
- **Eichenauer, Herbert, Dr.**
  **41539 Dormagen (DE)**
- **Alberts, Heinrich, Dr.**
  **51519 Odenthal (DE)**
- **Wittmann, Dieter, Dr.**
  **51375 Leverkusen (DE)**
- **Eckel, Thomas, Dr.**
  **41540 Dormagen (DE)**
- **Krüger, Peter, Dr.**
  **51375 Leverkusen (DE)**

(56) Entgegenhaltungen:
**EP-A- 0 335 159**
**EP-A- 0 419 927**
**DD-A- 155 775**
**EP-A- 0 416 407**
**CA-A- 1 032 683**
**US-A- 5 207 703**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 783 019 B1

## Beschreibung

Gegenstand der Erfindung sind Mischungen aus thermoplastischen Polymeren und feinstteiligen anorganischen Stoffen, die neben einem verbesserten Röntgenkontrast gute mechanische Eigenschaften aufweisen.

Der Nachweis von Kunststoffteilen im menschlichen Körper, z.B. verschlucktem Kunststoffspielzeug oder durch Unfälle im Gewebe eingesprengter Kunststoffpartikel, gewinnt an Bedeutung.

Eine Nachweismethode für Fremdkörper im menschlichen Organismus ist die Röntgendiagnostik. Konventionelle Kunststoffe bestehen zum überwiegenden Anteil aus Elementen mit niedrigen Ordnungszahlen (OZ), wie Kohlenstoff (OZ=6), Wasserstoff (OZ=1), Sauerstoff (OZ=8) und Stickstoff (OZ=7). Die effektiven Ordnungszahlen der Kunststoffe ähneln damit derjenigen des Wassers, so daß die Röntgendichten von konventionellen Kunststoffen und Wasser vergleichbar sind. Daher sind viele konventionelle Kunststoffe im lebenden Gewebe weitgehend röntgenstrahlentransparent.

Zur Erhöhung der Röntgendichte können Elemente mit höherer Ordnungszahl in den Kunststoffen dienen, z. B. Chlor (OZ = 17) im Polyvinylchlorid, Silicium (OZ = 14) in Silikonen und Fluor (OZ = 9) in Polyfluorcarbon. Bei den konventionellen Kunststoffen weist nur Polyvinylchlorid durch seine hohe Chlorkonzentration einen für die Röntgendiagnostik ausreichenden Kontrast auf (Fortschr. Röntgenstr. 128,6 (1978) 758-762).

Eine andere Möglichkeit zur Erhöhung der Röntgendichte ist der Einsatz von Füllstoffen wie Glasfasern ($SiO_2$) oder Farbstoffen bzw. Pigmenten, die aus Elementen mit höherer Ordnungszahl bestehen, z.B. $TiO_2$ (Ti: OZ = 22).

In der Medizin werden zur Sichtbarmachung von körpereigenen Strukturen mittels Röntgendiagnostik Verbindungen eingesetzt, die Atome mit hoher Ordnungszahl (Röntgenkontrastmittel) enthalten, wie $BaSO_4$ (Ba: OZ = 56) oder organische Iodverbindungen (Iod: OZ = 53). Die Röntgenkontrastmittel unterstützen auch die Ultraschalldiagnostik und die Computertomographie.

Um nun verschiedene Kunststoffe, insbesondere solche, ohne Elemente mit höherer Ordnungszahl (OZ > 8), röntgenologisch effektiv abzubilden, kann man z.B. nachträglich $BaSO_4$ einarbeiten.

Arbeitet man $BaSO_4$ in Polymere ein, so wird erwartungsgemäß der Röntgenkontrast gegenüber dem ungefüllten Polymeren deutlich verbessert. Konventionelle Füllstoffe verschlechtern jedoch die Zähigkeit drastisch und sind für transparente Polymere völlig ungeeignet (Trübung).

EP-A 419 927 beschreibt thermoplastische Formmassen aus Polyalkylenterephthalat, speziellem Bariumsulfat, teilchenförmigen Pfropfpolymerisaten und gegebenenfalls Verstärkungsmitteln, die eine verbesserte Wärmeformbeständigkeit und Zähigkeit aufweisen. EP-A 416 407 beschreibt thermoplastische Formmassen aus Polycarbonat, Polyalkylenterephthalat, speziellem Bariumsulfat und gegebenenfalls Elastomeren mit verbesserter Wärmeformbeständigkeit und Zähigkeit.

US-A 5,207,703 beschreibt medizinische Geräte und erwähnt allgemein, dass Bariumsulfat für Röntgenaufnahmen eingesetzt werden kann.

Es wurde gefunden, daß beim Einsatz von speziellen feinstteiligen Stoffen zur Erzielung eines Röntgenkontrastes im Vergleich zu entsprechenden konventionellen Stoffen die Zähigkeit deutlich weniger verschlechtert wird, Wärmeformbeständigkeit und Benzinbeständigkeit erhöht werden und die Transparenz weitgehend erhalten bleibt. Darüber hinaus ist der Röntgenkontrast der erfindungsgemäßen Formmassen gegenüber den mit konventionellen Mineralien gefüllten Formmassen schärfer.

Erfindungsgemäß sind zur Erhöhung des Röntgenkontrastes alle Füllstoffe, z.B. Pigmente, Farbstoffe, Fasern, geeignet, sofern sie Elemente enthalten, deren Ordnungszahl mindestens 5, vorzugsweise mindestens 15 und besonders bevorzugt mindestens 25 über denen des Elementes mit der höchsten Ordnungszahl im eingesetzten Kunststoff liegt, und ihr mittlerer Teilchendurchmesser 0,1 bis 100 nm beträgt. Besonders geeignet ist feinstteiliges $BaSO_4$.

Gegenstand der Erfindung sind thermoplastische Formmassen bestehend im wesentlichen aus

A) einem thermoplastischen Polymer ausgewählt aus

**A.1)** Copolymerisate aus einerseits Styrol, ∝-Methylstyrol, kernsubstituiertem Styrol oder Mischungen (A.1.1) und andererseits Acrylnitril, Methacrylnitril, Methylmethacrylat, Maleinsäureanhydrid, N-substituiertes Maleinimid oder Mischungen (A.1.2)

**A.2)** ein Pfropfpolymerisat von

A.2.1 5 bis 95 Gew.-Teilen, einer Mischung aus

A.2.1.1. 50 bis 95 Gew.-Teilen Styrol, $\alpha$-Methylstyrol, halogen- oder methylkernsubstituierten Styrolen, Methylmethacrylat oder Mischungen dieser Verbindungen und

A.2.1.1 5 bis 50 Gew.-Teilen Acrylnitril, Methacrylnitril, Methylmethacrylat, Maleinsäureanhydrid, $C_1$-$C_4$-alkyl- bzw. phenyl-N-substituierten Maleinimiden oder Mischungen dieser Verbindungen auf

A.2.2 5 bis 95 Gew.-Teile Kautschuk-Polymerisat mit einer Glasübergangstemperatur von - 10 °C.

oder Mischungen von A.1) und A.2), und gegebenenfalls thermoplastischem Polycarbonat,
und

B) 0,1 bis 50 Gew.-% (bezogen auf A) anorganischen Stoff mit einem mittleren Teilchendurchmesser von 0,1 bis 100 nm ausgewählt aus $BaSO_4$, TiN, $TiO_2$, TaC, SiC, WC, $WO_3$, $ZrO_2$ und Eisenoxiden, Mischungen hier aus oder dotierte Verbindungen.

Thermoplastische Polymere A

Besonders geeignet sind Polymere, die im verarbeiteten festen Zustand keine kristallinen Bereiche aufweisen, d.h. völlig amorph sind.

Als "amorph" wird hierbei der in L.H. Sperling: Indroduction to Physical Polymer Science, J. Wiley & Sons, 1986, S. 123 beschriebene Polymerzustand verstanden.

Thermoplastische Polymere sind ausgewählt aus

- kautschukfreien Vinylpolymerisaten (A.1)
- kautschukhaltigen Vinylpolymerisaten, z.B. Pfropfpolymerisaten von Vinylmonomeren auf einen Kautschuk (A.2)
- Mischungen aus kautschukfreien (A.1) und kautschukhaltigen (A.2) Vinylpolymerisaten.

Vinylpolymerisate A.1 sind Copolymerisate aus einerseits Styrol, ∝-Methylstyrol, kernsubstituiertem Styrol oder Mischungen (A.1.1) und andererseits Acrylnitril, Methacrylnitril, Methylmethacrylat, Maleinsäureanhydrid, N-substituiertes Maleinimid oder Mischungen (A.1.2).

Bevorzugt enthalten diese Copolymerisate 50 bis 98 Gew.-% A.1.1 und 50 bis 2 Gew.-% A.1.2.

Besonders bevorzugte Copolymerisate A.1 sind solche aus Styrol, Acrylnitril und gegebenenfalls Methylmethacrylat, aus α-Methylstyrol, Acrylnitril und gegebenenfalls Methylmethacrylat sowie aus Styrol, α-Methylstyrol, Acrylnitril und gegebenenfalls Methylmethacrylat.

Die bekanntesten sind Styrol-Acrylnitril-Copolymerisate, die durch radikalische Polymerisation, insbesondere durch Emulsions-, Suspensions-, Lösungs- oder Massepolymerisation hergestellt werden können. Die Copolymerisate A.1 besitzen vorzugsweise Molekulargewichte $\overline{M}_w$ (Gewichtsmittel, ermittelt durch Lichtstreuung oder Sedimentation) von 15.000 bis 200.000.

Weitere besonders bevorzugte Copolymerisate A.1 sind statistisch aufgebaute Copolymerisate aus Styrol und Maleinsäureanhydrid, die z.B. durch eine kontinuierliche Masse- oder Lösungspolymerisation bei unvollständigen Umsätzen aus dem entsprechenden Monomeren hergestellt werden können. Ihre Zusammensetzung kann innerhalb weiter Grenzen variiert werden. Bevorzugt enthalten sie 5 bis 25 Gew.-% Maleinsäureanhydrideinheiten.

Anstelle von Styrol können diese Polymerisate auch kernsubstituierte Styrole, wie p-Methylstyrol, Vinyltoluol, 2,4-Dimethylstyrol und andere substituierte Styrole, wie α-Methylstyrol, enthalten.

Bevorzugte Polymerisate A.2 sind partiell vernetzt und besitzen Gelgehalte von über 20 Gew.-%, vorzugsweise über 40 Gew.-%, insbesondere über 60 Gew.-%.

Kautschukartige Vinylpolymerisate A.2 sind Pfropfpolymerisate aus:

A.2.1 5 bis 95, vorzugsweise 30 bis 80 Gew.-Teilen, einer Mischung aus

A.2.1.1 50 bis 95 Gew.-Teilen Styrol, α-Methylstyrol, halogen- oder methylkernsubstituierten Styrolen, Methylmethacrylat oder Mischungen dieser Verbindungen und

A.2.1.2 5 bis 50 Gew.-Teilen Acrylnitril, Methacrylnitril, Methylmethacrylat, Maleinsäuranhydrid, $C_1$-$C_4$-alkyl- bzw. phenyl-N-substituierten Maleinimiden oder Mischungen dieser Verbindungen auf

A.2.2 5 bis 95, vorzugsweise 20 bis 70 Gew.-Teile Kautschuk-Polymerisat mit einer Glasübergangstemperatur unter -10°C.

Bevorzugte Pfropfpolymerisate A.2 sind z.B. mit Styrol und/oder Acrylnitril und/oder Methacrylaten gepfropfte Polybutadiene, Butadien/Styrol-Copolymerisate und Acrylatkautschuke; d.h. Copolymerisate der in der DE-OS 1 694 173 (= US-PS 3 564 077) beschriebenen Art; mit Methacrylsäurealkylestern, Vinylacetat, Acrylnitril, Styrol und/oder

Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzugte Polymerisate A.2 sind ABS-Polymerisate, wie sie z.B. in der DE-OS 2 035 390 (= US-PS 3 644 574) und in der DE-OS 2 248 242 (= GB-PS 1 409 275) beschrieben sind.

Besonders bevorzugte Pfropfpolymerisate A.2 sind erhältlich durch Pfropfpolymerisation von

α. 10 bis 70, vorzugsweise 15 bis 50, insbesondere 20 bis 40 Gew.-%, bezogen auf Pfropfpolymerisat A.2, von Methacrylsäureestern oder von 10 bis 70, vorzugsweise 15 bis 50, insbesondere 20 bis 40 Gew.-% eines Gemisches aus 10 bis 50, vorzugsweise 20 bis 35 Gew.-%; bezogen auf Gemisch, Acrylnitril, oder Methacrylsäureester und 50 bis 90, vorzugsweise 65 bis 80 Gew.-%, bezogen auf Gemisch, Styrol (als Pfropfauflage A.2.1) auf

β. 30 bis 90, vorzugsweise 50 bis 85, insbesondere 60 bis 80 Gew.-%, bezogen auf Pfropfpolymerisat A.2, eines Butadien-Polymerisats mit mindestens 50 Gew.-%, bezogen auf β, Butadienresten (als Pfropfgrundlage A.2.2),

wobei vorzugsweise der Gelanteil der Pfropfgrundlage β mindestens 40 Gew.-% (in Toluol gemessen), der Pfropfgrad G 0,15 bis 0,55 und der mittlere Teilchendurchmesser $d_{50}$ des Pfropfpolymerisats A.2 0,05 bis 2 μm, vorzugsweise 0,1 bis 0,6 μm beträgt.

Methacrylsäureester α sind Ester der Methacrylsäure und einwertiger Alkohole mit 1 bis 18 C-Atomen. Besonders bevorzugt sind Methylmethacrylat, Ethylmethacrylat, Propylmethacrylat, und t-Butylmethacrylat.

Das Butadienpolymerisat β kann neben Butadienresten bis zu 50 Gew.-%, bezogen auf β, Reste anderer ethylenisch ungesättigter Monomerer, wie Styrol, Acrylnitril, $C_1$-$C_4$-Alkylester oder Acryl- oder Methyacrylsäure (wie Methylacrylat, Ethylacrylat, Methylmethacrylat, Ethylmethacrylat), Vinylester und/oder Vinylether) enthalten. Bevorzugt ist Polybutadien.

Bei der Pfropfpolymerisation werden die Pfropfmonomeren bekanntlich nicht vollständig auf die Pfropfgrundlage polymerisiert; erfindungsgemäß schließen Pfropfpolymerisate A.2 aber Produkte ein, die durch Polymerisation der Pfropfmonomere in Gegenwart der Pfropfgrundlage gewonnen werden.

Der Pfropfgrad G ist das Gewichtsverhältnis von aufgepfropften Pfropfmomomeren zur Pfropfgrundlage (Dimensionslose Zahl).

Der mittlere Teilchendurchmesser $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Weitere besonders bevorzugte Polymerisate A.2 sind Pfropfpolymerisate aus

τ. 20 bis 90 Gew.-%, bezogen auf A.2, Acrylatkautschuk mit einer Glasübergangstemperatur unter -20°C als Pfropfgrundlage A.2.2 und

δ. 10 bis 80 Gew.-%, bezogen auf A.2, mindestens eines polymerisierbaren, ethylenisch ungesättigten Monomeren, dessen bzw. deren in Abwesenheit von 1. entstandenen Homo- bzw. Copolymerisate eine Glasübergangstemperatur über 25°C hätten, als Pfropfmonomere A.2.1.

Die Acrylatkautschuke τ der Polymerisate A.2 sind vorzugsweise Polymerisate aus Acrylsäurealkylestern, gegebenenfalls mit bis zu 40 Gew.-%, bezogen auf τ, anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethyl-hexylester; Halogenalkylester, vorzugsweise Halogen-$C_1$-$C_8$-alkyl-ester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykol-dimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf die Pfropfgrundlage τ.

Bei cyclischen vernetzenden Monomeren mit mindestens 3 ethylenisch ungesättigten Gruppen ist es vorteilhaft, die Menge auf unter 1 Gew-% der Pfropfgrundlage τ zu beschränken.

Bevorzugte "andere" polymerisierbare, ethylenisch ungesättigte Monomere, die neben den Acrylsäureestern gegebenenfalls zur Herstellung der Pfropfgrundlage dienen können, sind z.B. Acrylnitril, Styrol, α-Methylstyrol, Acrylamide, Vinyl-$C_1$-$C_6$-Alkylether, Methylmethacrylat, Butadien. Bevorzugte Acrylatkautschuke als Pfropfgrundlage τ sind Emulsionspolymerisate, die einen Gelgehalt von mindestens 60 Gew.-% aufweisen.

Weitere geeignete Pfropfgrundlagen gemäß A.2.2 sind Silikonkautschuke mit pfropfaktiven Stellen, wie sie in DE-OS 37 04 657, DE-OS 37 04 655, DE-OS 36 31 540 und DE-OS 36 31 539 beschrieben werden.

Der Gelgehalt der Pfropfgrundlage A.2.2 wird bei 25°C in Dimethylformamid bestimmt (M. Hoffmann, H. Krömer, R. Kuhn, Polymeranalytik I und II, Georg-Thieme-Verlag, Stuttgart 1977).

Die Pfropfpolymerisate A. 2 können nach bekannten Verfahren wie Masse-, Suspensions-, Emulsions- oder Masse-Suspensionsverfahren hergestellt werden.

Die thermoplastischen Polymere A können auch Polykondensate sein, die durch Polykondensation aus mindestens einer reaktiven Verbindung hergestellt worden sind vorzugsweise Polycarbonate und/oder Polyester.

Bevorzugte Polycarbonate sind solche auf Basis der Diphenole der Formel (I)

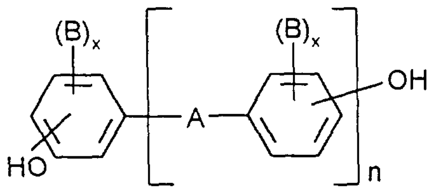

(I)

worin

A eine Einfachbindung, ein $C_1$-$C_5$-Alkylen, ein $C_2$-$C_5$-Alkyliden, ein $C_5$-$C_6$-Cycloalkyliden, -S- oder $-SO_2-$,

B Chlor, Brom

X 0, 1 oder 2 und

n 1 oder 0 sind.

Erfindungsgemäß geeignete Polycarbonate sind sowohl Homopolycarbonate als auch Copolycarbonate.

A kann auch eine Mischung der vorstehend definierten thermoplastischen Polycarbonate sein.

Polycarbonate können in bekannter Weise aus Diphenolen mit Phosgen nach dem Phasengrenzflächenverfahren oder mit Phosgen nach dem Verfahren in homogener Phase, dem sogenannten Pyridinverfahren, hergestellt werden, wobei das Molekulargewicht in bekannter Weise durch eine entsprechende Menge an bekannten Kettenabbrechern eingestellt werden kann.

Geeignete Kettenabbrecher sind z.B. Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 (Le A 19 006) oder Monoalkylphenol bzw. Dialkylphenol mit insgesamt 8-20 C-Atomen in den Alkylsubstituenten gemäß deutscher Patentanmeldung P 3 506 472.2, wie 3,5-di-tert.-Butylphenol, p-iso-Octylphenol, p-tert.-Octylphenol, p-Dodecylphenol und 2-(3,5-Dimethyl-heptyl)-phenol und 4-(3,5-Dimethyl-heptyl)-phenol.

Die Menge an Kettenabbrechern beträgt im allgemeinen zwischen 0,5 und 10 Mol-%, bezogen auf die Summe der jeweils eingesetzten Diphenole (I).

Die erfindungsgemäß geeigneten Polycarbonate A haben mittlere Molekulargewichte ($\overline{M}_w$, Gewichtsmittel, gemessen z.B. durch Ultrazentrifugation oder Streulichtmessung) von 10 000 bis 200 000, vorzugsweise von 20 000 bis 80 000.

Geeignete Diphenole der Formel (I) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dibrom-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Bevorzugte Diphenole sind auch alkylsubstituierte Dihydroxydiphenylcycloalkane der Formel (II),

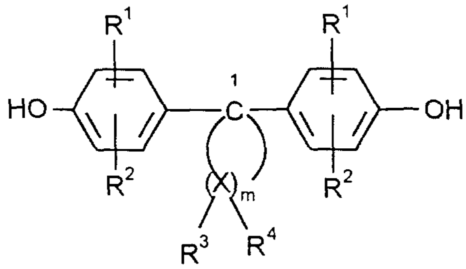

(II)

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$ für jedes X individuell wählbar, unabhängig voneinander Wasserstoff oder $C_1$-$C_6$-Alkyl

und

X Kohlenstoff bedeuten,
mit der Maßgabe, daß an mindestens einem Atom X $R^3$ und $R^4$ gleichzeitig Alkyl bedeuten.

Die erfindungsgemäß geeigneten Polycarbonate A können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, z.B. solchen mit drei oder mehr als drei phenolischen Gruppen.

Bevorzugte Polycarbonate sind neben dem Bisphenol-A-Homopolycarbonat die Copolycarbonate von Bisphenol A mit bis zu 15 Mol-%, bezogen auf die Mol-Summen an Diphenolen, an 2,2-Bis-(3,5-dibrom-4-hydroxyphenyl)-propan.

Die Polycarbonate A können teilweise oder vollständig durch aromatische Polyestercarbonate ersetzt werden.

Bevorzugte Polyester A sind Polyalkylenterephthalate. Diese sind Reaktionsprodukte von aromatischen Dicarbonsäuren (oder ihren reaktionsfähigen Derivaten, z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen und cycloaliphatischen Diolen mit 2 bis 10 C-Atomen nach bekannten Methoden herstellen (Kunststoff-Handbuch), Band VIII, S. 695 ff, Carl Hanser Verlag, München 1973).

Bevorzugte Polyalkylenterephthalate enthalten 80 bis 100, vorzugsweise 90 bis 100 Mol-%, bezogen auf die Dicarbonsäurekomponente, Terephthalsäurereste und 80 bis 100, vorzugsweise 90 bis 100 Mol-%, bezogen auf die Diolkomponente, Ethylenglykol und/oder Butandiol-1,4-Reste. Neben Terephthalsäureresten sind 0 bis 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacin-, Azelain- oder Cyclohexandiessigsäure. Neben Ethylenglykol- und/oder Butandiol-1,4-Resten sind 0 bis 20 Mol-% anderer aliphatischer Diole mit 3 bis 12 C-Atomen oder cycloaliphatischer Diole mit 6 bis 12 C-Atomen enthalten, z.B. Reste von Pentandiol-1,5, Hexandiol-1,6, Cyclohexandimethanol-1,4, 3-Methylpentandiol-1,3 und -1,6, 2-Ethylhexandiol-1,3, 2,2-Diethylpropandiol-1,3, Hexandiol-2,5, 1-4-Di(β-hydroxyethoxyphenyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate können durch Einbau relativ kleiner Mengen 3- oder 4-wertiger Alkohole oder 3- oder 4-basiger Carbonsäuren, wie sie in DE-OS 1 900 270 und US-PS 3 692 744 beschrieben sind, verzweigt werden. Beispiele bevorzugter Verzweigungsmittel sind Trimesinsäure, Trimellithsäure, Trimethylolethan und -propan und Pentraerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure (oder deren reaktionsfähigen Derivaten, z.B. deren Dialkylestern) und Ethandiol und/oder Butandiol-1,4 hergestellt worden sind, sowie deren Mischungen.

Bevorzugte Polyalkylenterephthalate sind auch Copolyester, die aus mindestens zwei der obengenannten Diole hergestellt sind; besonders bevorzugte Copolyester sind Poly-(ethylenglykol/butandiol-1,4)-terephthalate. In den Copolyestern können die verschiedenen Diolreste in Form von Blöcken oder statistisch verteilt vorliegen.

Die Polyalkylenterephthalate besitzen im allgemeinen eine Intrinsic-Viskosität von 0,4 bis 1,4 dl/g, vorzugsweise 0,5 bis 1,3 dl/g, insbesondere 0,6 bis 1,2 dl/g, jeweils gemessen in Phenol/o-Dichlorbenzol (1:1 Gew.-Tl.) bei 25°C.

Feinstteilige anorganische Materialien B

Komponente B umfaßt feinstteilige anorganische Materialien aus $BaSO_4$, TiN, $TiO_2$, TaC, SiC, WC, $WO_3$, $ZrO_2$, Eisenoxide. Mischungen und dotierte Verbindungen sind ebenfalls verwendbar. Besonders bevorzugt sind $BaSO_4$, $TiO_2$, $ZrO_2$, ganz besonders bevorzugt ist $BaSO_4$.

Die feinstteiligen anorganischen Materialien können nach üblichen Verfahren in die thermoplastischen Kunststoffe A eingearbeitet werden, beispielsweise durch direktes Kneten oder Extrudieren von Kunststoff A und den feinstteiligen anorganischen Pulvern B. Bevorzugte Verfahren stellen die Herstellung eines Masterbatch, z.B. in Flammschutzadditiven und anderen Additiven, Monomeren oder Lösungsmitteln, oder die Cofällung einer wäßrigen Emulsion und den feinstteiligen anorganischen Materialien dar.

Erfindungsgemäß ist die Herstellung von feinstteiligen anorganischen Materialien in Gegenwart von wäßrigen Polymersystemen, z.B. ABS-Latices. Damit gelingt ohne separate Aufarbeitung der feinstteiligen anorganischen Materialien die Einarbeitung in die thermoplastischen Formmassen.

Die durchschnittlichen Teilchendurchmesser ($d_{50}$) sind 0,1 bis 100 nm, bevorzugt 0,1 bis 50 nm, besonders bevorzugt 0,1 bis 30 nm.

Teilchengröße und Teilchendurchmesser bedeutet immer den mittleren Teilchendurchmesser $d_{50}$. Dies kann z.B. durch Ultrazentrifugenmessungen nach W. Scholtan et al., Kolloid-Z und Z. Polymere 250 (1972), S. 782 bis 796 bestimmt werden (bevorzugt bei Dispersionen) oder durch Transmissionselektronenmirkoskopie TEM) (bevorzugt bei thermoplastischen Formmassen).

Die erfindungsgemäßen Formmassen enthalten mindestens ein thermoplastisches Polymerisat auf Basis von ungesättigten Monomeren enthaltend mindestens ein Styrol(derivat) oder mindestens ein Polykondensat von bifunktionellen reaktiven Verbindungen oder Mischungen daraus, und mindestens ein anorganisches Material mit einem mittleren Teilchendurchmesser ($d_{50}$) von 0,1 bis 100 nm, bevorzugt 1 bis 50 nm, besonders bevorzugt 1 bis 30 nm. Bevorzugte Mengen der anorganischen feinstteiligen Materialien sind 0,1 bis 50 Gew.-%, besonders bevorzugt 0,1 bis 30 Gew.-%, ganz besonders bevorzugt 0,1 bis 10 Gew.-% (bezogen auf thermoplastische Formmassen A).

Zur Erhöhung des Röntgenkontrastes sind weiterhin alle üblichen Füllstoffe, z.B. Pigmente, Farbstoffe, Fasern geeignet, die Elemente enthalten, deren Ordnungszahl über denen des Elementes mit der höchsten Ordnungszahl im eingesetzten Kunststoff liegt und deren mittlerer Teilchendurchmesser im erfindungsgemäßen Bereich liegt.

Neben den erfindungsgemäßen Verbindungen können die Formmassen übliche Zusätze wie Pigmente, Füllstoffe, Stabilisatoren, Antistatika, Gleitmittel, Entformungsmittel, Flammschutzmittel enthalten, sofern sie die Zähigkeit nicht reduzieren.

**Herstellung und Prüfung der erfindungsgemäßen Formmassen**

Beispiel 1 (Vergleich)

Handelsübliches $BaSO_4$ (Barifine BF20, Nordmann+Rassmann, Teilchengröße ca. 25 µm) wird in ein Acrylnitril-Butadien-Styrol-Copolymer (ABS) eingearbeitet, indem das Polymer in Gegenwart von $BaSO_4$ aufgeschmolzen wird, die Komponenten gemischt und direkt abgespritzt werden. Die durchschnittliche Teilchengröße des $BaSO_4$ im Polymer (Bildauswertung aus Transmissionselektronenmikroskopie) beträgt ca. 25 µm, die $BaSO_4$-Konzentration beträgt 10 Gew.-% (Polymer P1).

Die Herstellung von Spritzgußteilen für die Ausprüfung der Eigenschaften an den Polymeren P1, P2, P2A, P3, P4, P5 und P6 erfolgt durch Vormischen der Komponenten, ("Dry Blending") und anschließender Direktverarbeitung. Dazu wird das Gemisch aufgeschmolzen und direkt abgespritzt. Die Verarbeitungstemperatur beträgt 250°C, die Werkzeugtemperatur 70°C.

Beispiel 2 (Erfindungsgemäß)

Feinstteiliges $BaSO_4$ wird in-situ in Gegenwart eines SAN-Latex hergestellt. Dazu werden 5,261 kg SAN-Latex (Feststoff: 43,55 Gew.-%) vorgelegt und 22,2 g Natriumdodecylsulfat (SDS) in 380 g Wasser innerhalb von 50 min zugetropft. Anschließend werden 244,7 g $Na_2SO_4$ in 4 600 g Wasser innerhalb von 2,5 h zugetropft. Anschließend

erfolgt die Zugabe von 367 g $Ba(Acetat)_2$ in 4 000 g Wasser über 2,5 h bei einer Rührgeschwindigkeit von 430 U/min. Barium liegt gegenüber Sulfat im Unterschuß vor.

Anschließend wird der Latex gefällt. Dazu wird eine Fällflotte bestehend aus 11,5 Wasser, 115 ml konz. Essigsäure und 230 g Bittersalz ($MgSO_4$*$7H_2O$) vorgelegt. Die Flotte wird auf 95°C aufgeheizt. Unter Rühren wird die Dispersion zugegeben, auf 100°C aufgeheizt und 10 min bei dieser Temperatur belassen. Die Fällung wird durch Wasserzugabe abgekühlt und auf einem Planfilter sulfatfrei gewaschen. Das entstandene Pulver wird bei 70°C getrocknet (Polymer P2). Der mittlere Teilchendurchmesser des $BaSO_4$ im Polymer (Bildauswertung aus Transmissionselektronenmikroskopie) beträgt ca. 40 nm.

Das Polymer P2 wird mit einem ABS-Pfropfpulver vermischt und abgespritzt. Der $BaSO_4$-Anteil im Endprodukt beträgt 10 Gew.-%. Die durchschnittliche Partikelgröße des $BaSO_4$ im Polymer (Bildauswertung aus Transmissionselektronenmikroskopie) beträgt ca. 40 nm (Polymer P2A).

Beispiel 3 (Vergleich)

Handelsübliches $BaSO_4$ (Barifine BF 20, Nordmann+Rassmann, mittlerer Teilchendurchmesser ca. 25 µm) wird in ein Acrylnitril-Styrol-Copolymer (SAN) eingearbeitet, indem das Polymer in Gegenwart von $BaSO_4$ aufgeschmolzen wird, die Komponenten gemischt und direkt abgespritzt werden. Der mittlere Teilchendurchmesser des $BaSO_4$ im Polymer (Bildauswertung aus Transmissionselektronenmikroskopie) beträgt ca. 25 µm, die $BaSO_4$-Konzentration beträgt 10 Gew.-% (Polymer P3). Die Polymermatrix ist ohne $BaSO_4$ transparent.

Beispiel 4 (erfindungsgemäß)

Das in Beispiel 2 hergestellte Pulver (Polymer P2), bestehend aus feinstteiligem $BaSO_4$ in gefälltem und getrocknetem SAN-Latex, wird nicht wie in Beispiel 2 mit einem ABS-Pfropfpulver vermischt, sondern mit SAN (Polymer P4). Der mittlere Teilchendurchmesser des $BaSO_4$ im Polymer (Bildauswertung aus Transmissionselektronenmikroskopie) beträgt ca. 40 nm, die $BaSO_4$-Konzentration beträgt 10 Gew.-%. Die Polymermatrix ist ohne $BaSO_4$ transparent.

Beispiel 5 (Vergleich)

SAN wird mit ABS-Pfropfpulver gemischt (Polymer P5) und verspritzt.

Beispiel 6 (Vergleich)

SAN wird zu Vergleichszwecken abgespritzt (Polymer P6)

Die Polymerzusammensetzung der Polymerisate P1, P2A und P5 ist identisch und hat folgende Zusammensetzung:

Die Acrylnitril-Butadien-Styrol-Polymerisate (ABS) bestehen aus 63,64 Gew.-% SAN-Harz und 36,36 Gew.-% ABS-Propfpulver. SAN ist ein thermoplastisches Harz bestehend aus 28 Gew.-% Acrylnitril und 72 Gew.-% Styrol. SAN kann durch Emulsionspolymerisation (SAN-Latex) oder Masseverfahren hergestellt werden. Die Viskosität des SAN-Harzes wurde durch den L-Wert charakterisiert (L-Wert = $\eta_{spez./C}$ bei c = 5 g/l in DMF bei 25°C). Der L-Wert des eingesetzten SAN-Harzes ist 60.

ABS-Propfpulver wird durch Emulsionspolymerisation von Styrol und Acrylnitril in Gegenwart einer wäßrigen Polybutadien-Emulsion (Polybutadien-Grundlage) hergestellt. Dabei wird Styrol und Acrylnitril auf die Polybutadien-Teilchen aufgepfropft. Die Pfropfung ist bekanntermaßen nicht vollständig, so daß neben gepfropftem SAN auch freies SAN im ABS-Propfpulver vorliegt. Das ABS-Pfropfpulver besteht aus 55 Gew.-% Polybutadien und 45 Gew.-% SAN (Styrol:Acrylnitril = 72 Gew.-%:28 Gew.-%). Die Partikelgröße der Polybutadien-Grundlage beträgt 0,4 µm.

Die Polymerzusammensetzung der Polymerisate P3, P4 und P6 ist identisch und hat folgende Zusammensetzung:

Das Styrol-Acrylnitril-Polymerisat (SAN) stellt ein transparentes, thermoplastisches Harz dar, bestehend aus 28 Gew.-% Acrylnitril und 72 Gew.-% Styrol. SAN kann durch Emulsionspolymerisation (SAN-Latex) oder Massevefaharen hergestellt werden. Die Viskosität des SAN-Harzes wurde durch den L-Wert charakterisiert (L-Wert = $\eta_{spez./C}$ bei c = 5 G/l in DMF bei 25°C). Der L-Wert des eingesetzten SAN-Harzes ist 60.

Vergleich von Polymer P1, P5 und P2A

Zum Vergleich der Eigenschaften von konventionellem $BaSO_4$ und feinstteiligem $BaSO_4$ in thermoplastischen

Formmassen werden die thermoplastischen Formmassen abgespritzt und folgende Untersuchungen durchgeführt:

a) Kerbschlagzähigkeit ($a_k$)

Durch Spritzgießen werden Stäbe der Abmessung 80 x 10 x 4 $mm^3$ hergestellt, an denen die Kerbschlagzähigkeit bei Raumtemperatur nach der Methode ISO 180 1 A gemessen wird.

b) Zug-E-Modul

Durch Spritzgießen werden Schulterstäbe ("Zugstab Nr. 3") hergestellt, an denen Zugversuche nach DIN 53 455 mit E-Modulbestimmung nach DIN 53 457 durchgeführt werden.

c) Wärmeformbeständigkeit (Vicat B 120)

Durch Spritzgießen werden Stäbe der Abmessung 80 x 10 x 4 $mm^3$ hergestellt, an denen die Vicat-Erweichungstemperatur (VST) nach ISO 306 bestimmt wird.

d) ESC-Verhalten (Benzinbeständigkeit)

Die Benzinbeständigkeit (Spannungsrißverhalten) wird an den Flachstäben 80 x 10 x 4 $mm^3$ gemäß DIN 53 449/3 untersucht. Als Kraftstoffsimulanz wurde eine Mischung aus 50 Gew.-% Toluol und 50 Gew.-% Isooctan verwendet. Die Probekörper wurden mittels einer Kreisbogenschablone vorgedehnt und 5 Minuten bei 23°C im Kraftstoffsimulanz gelagert. Das Spannungsrißverhalten wurde über die Rißbildung bzw. den Bruch beurteilt. Die Vordehnung, bei der nach 5 Minuten ein Bruch auftritt, ist in folgender Tabelle dargestellt.

Die Ergebnisse der Untersuchungen sind in folgender Tabelle zusammengefaßt:

| Polymer | $BaSO_4$ [Gew.-%] | Feinstteiliges $BaSO_4$ [Gew.-%] | ak [kJ/$m^2$] | E-Modul [N/$mm^2$] | Vicat B 120 [°C] | Vordehnung bis zum Bruch |
|---|---|---|---|---|---|---|
| P5 | - | - | 19 | 2330 | 99 | 0,6 |
| P1 | 10 | - | 4 | 2560 | 100 | 0,4 |
| P2A (erfindungsgemäß) | - | 10 | 12 | 2500 | 103 | 2,4 |

Die Kerbschlagzähigkeit zeigt bei 10 Gew.-% feinstteiligem $BaSO_4$ ein für ABS akzeptables Niveau, während die Kerbschlagzähigkeit mit 10 Gew.-% handelsüblichem $BaSO_4$ drastisch abfällt (Abnahme auf ca. 1/5 des Ausgangsniveaus). Bereits geringe Mengen des handelsüblichen $BaSO_4$ (1,5 Gew.-%) führen zu einem Zähigkeitsabfall auf ca. die Hälfte des Ausgangsniveaus.

Die Benzinbeständigkeit, ausgedrückt in der Randfaserdehnung bis zum Bruch, ist deutlich verbessert beim Zusatz von feinstteiligem $BaSO_4$. Der Zusatz von konventionellem $BaSO_4$ verbessert diese Eigenschaft nicht.

Polymer P5 zeigt im Röntgenexperiment keinen Röntgenkontrast. Polymer P1 zeigt unter den gleichen Bedingungen einen deutlichen, etwas diffusen Röntgenkontrast, während das erfindungsgemäße Polymer P2A unter gleichen Bedingungen einen deutlichen, scharfen Röntgenkontrast zeigt.

Vergleich von P4, P3 und P6

Verglichen wird die Transparenz von SAN, einem transparenten Polymer, nach Zusatz von handelsüblichem $BaSO_4$ und feinstteiligem $BaSO_4$. Gemessen wird die Trübung nach ASTM D 1003.
Die Stärke der Probenkörper beträgt 2 mm.
Die Ergebnisse der Untersuchungen sind in folgender Tabelle zusammengefaßt:

| Polymer | $BaSO_4$ [Gew.-%] | Feinstteiliges $BaSO_4$ [Gew.-%] | Trübung [%] |
|---|---|---|---|
| P6 | - | - | 34 |
| P3 | 10 | - | 89 |

(fortgesetzt)

| Polymer | $BaSO_4$ [Gew.-%] | Feinstteiliges $BaSO_4$ [Gew.-%] | Trübung [%] |
|---|---|---|---|
| P4 (erfindungsgemäß) | - | 10 | 56 |

## Patentansprüche

**1.** Thermoplastische Formmassen bestehend im wesentlichen aus

A) einem thermoplastischen Polymer ausgewählt aus

**A.1)** Copolymerisate aus einerseits Styrol, ∝-Methylstyrol, kernsubstituiertem Styrol oder Mischungen (A. 1.1) und andererseits Acrylnitril, Methacrylnitril, Methylmethacrylat, Maleinsäureanhydrid, N-substituiertes Maleinimid oder Mischungen (A.1.2)

**A.2)** ein Pfropfpolymerisat von

A.2.1 5 bis 95 Gew.-Teilen, einer Mischung aus
A.2.1.1. 50 bis 95 Gew.-Teilen Styrol, α-Methylstyrol, halogen- oder methylkernsubstituierten Styrolen, Methylmethacrylat oder Mischungen dieser Verbindungen und
A.2.1.1 5 bis 50 Gew.-Teilen Acrylnitril, Methacrylnitril, Methylmethacrylat, Maleinsäureanhydrid, $C_1$-$C_4$-alkyl- bzw. phenyl-N-substituierten Maleinimiden oder Mischungen dieser Verbindungen auf
A.2.2 5 bis 95 Gew.-Teile Kautschuk-Polymerisat mit einer Glasübergangstemperatur von - 10 °C.

oder Mischungen von A.1) und A.2), und gegebenenfalls thermoplastischem Polycarbonat,
und

B) 0,1 bis 50 Gew.-% (bezogen auf A) anorganischen Stoff mit einem mittleren Teilchendurchmesser von 0,1 bis 100 nm ausgewählt aus $BaSO_4$, TiN, $TiO_2$, TaC, SiC, WC, $WO_3$, $ZrO_2$ und Eisenoxiden, Mischungen hieraus oder dotierte Verbindungen.

**2.** Thermoplastische Formmasse gemäß Anspruch 1, worin A.1) ein Copolymerisat aus 50 - 98 Gew.-% Styrol, α-Methylstyrol, kernsubstituiertem Styrol, Methylmethacrylat oder Mischungen daraus und 50 bis 2 Gew.-% Acrylnitril, Methacrylnitril, Methylmethacrylat, Maleinsäureanhydrid, N-substituiertem Maleinimid oder Mischungen daraus ist.

**3.** Formmasse gemäß Ansprüche 1 oder 2, wobei das Kautschuk-Polymerisat A.2.2 ausgewählt ist aus Polybutadien, Butadien/Styrol-Copolymerisaten, Acrylatkautschuken und Silikonkautschuken.

**4.** Formmasse gemäß Ansprüche 1 bis 3, enthaltend 0,1 bis 30 Gew.-%, bezogen auf A), Komponente B.

**5.** Formmasse gemäß Ansprüche 1 bis 4, wobei der durchschnittliche Teilchendurchmesser der Komponente B) 0,1 bis 50 nm beträgt.

**6.** Formmasse gemäß Anspruch 5, wobei der durchschnittliche Teilchendurchmesser 0,1 bis 30 nm beträgt.

**7.** Formmasse gemäß Ansprüche 1 bis 6, wobei Komponente B) ausgewählt ist aus Bariumsulfat, Titandioxid oder Zirkondioxid.

**8.** Thermoplastische Formmassen gemäß Anspruch 1 bis 7, worin B) $BaSO_4$ ist.

**9.** Formmassen gemäß Anspruch 1, worin A) eine Mischung aus thermoplastischem Polycarbonat, Copolymerisat und Pfropfpolymerisat harzbildender Vinylmonomerer auf einen Kautschuk ist.

**10.** Verfahren zur Herstellung der thermoplastischen Formmassen gemäß Anspruch 1, **dadurch gekennzeichnet, daß** man das anorganische Material mit einem mittleren Teilchendurchmesser von 0,1 bis 100 nm in Gegenwart

eines Latex des thermoplastischen Polymerisats herstellt und dann gemeinsam aufarbeitet.

**11.** Verwendung feinstteiliger anorganischer Stoffe gemäß B) in Anspruch 1 zur Erhöhung des Röntgenkontrastes thermoplastischer Formmassen aus A) und B).

**12.** Thermoplastische Formmassen gemäß Anspruch 1 bis 10, enthaltend übliche Zusätze.

**Claims**

**1.** Thermoplastic moulding compositions substantially consisting of

A. a thermoplastic polymer selected from

**A.1)** copolymers formed firstly from styrene, $\alpha$-methylstyrene, a styrene comprising a substituted nucleus or mixtures thereof (A.1.1), and secondly from acrylonitrile, methacrylonitrile, methyl methacrylate, maleic anhydride, N-substituted maleinimide or mixtures thereof (A.1.2),

**A.2)** a graft polymer of

A.2.1 5 to 95 parts by weight of a mixture of
A.2.1.1 50 to 95 parts by weight of styrene, $\alpha$-methylstyrene, styrenes comprising halogen- or methyl-substituted nuclei, methyl methacrylate, or mixtures of said compounds, and
A.2.1.2 5 to 50 parts by weight of acrylonitrile, methacrylonitrile, methyl methacrylate, maleic anhydride, $C_1$-$C_4$ alkyl- or phenyl-N-substituted maleinimides or mixtures of said compounds, on
A.2.2 5 to 95 parts by weight of a rubber polymer having a glass transition temperature of -10°C,

or mixtures of A.1) and A.2) and optionally of a thermoplastic polycarbonate, and

B) 0.1 to 50 % by weight (with respect to A) of an inorganic substance with an average particle diameter of 0.1 to 100 nm,
selected from $BaSO_4$, TiN, $TiO_2$, TaC, SiC, WC, $WO_3$, $ZrO_2$ and iron oxides, and mixtures thereof or of doped compounds.

**2.** Thermoplastic moulding compositions according to claim 1, wherein A.1) is a copolymer of 50 - 98 % by weight of styrene, $\alpha$-methylstyrene, styrene comprising a substituted nucleus, methyl methacrylate, or mixtures thereof, and 50 to 2 % by weight of acrylonitrile, methacrylonitrile, methyl methacrylate, maleic anhydride, an N-substituted maleic imide or mixtures thereof.

**3.** A moulding composition according to claims 1 or 2, wherein rubber polymer A.2.2 is selected from polybutadiene, butadiene/styrene copolymers, acrylate rubbers and silicone rubbers.

**4.** A moulding composition according to claims 1 to 3, containing 0.1 to 30 % by weight of component B with respect to A).

**5.** A moulding composition according to claims 1 to 4, wherein the average particle diameter of component B) is 0.1 to 50 nm.

**6.** A moulding composition according to claim 5, wherein the average particle diameter is 0.1 to 30 nm.

**7.** A moulding composition according to claims 1 to 6, wherein component B) is selected from barium sulphate, titanium dioxide or zirconium dioxide.

**8.** Thermoplastic moulding compositions according to claims 1 to 7, wherein B) is $BaSO_4$.

**9.** Thermoplastic moulding compositions according to claim 1, wherein A) is a mixture of a thermoplastic polycarbonate, a copolymer and a graft polymer of resin-forming vinyl monomers on a rubber.

10. A process for producing thermoplastic moulding compositions according to claim 1, **characterised in that** the inorganic material, which has an average particle diameter of 0.1 to 100 nm, is produced in the presence of a latex of the thermoplastic polymer and is then worked up jointly.

11. The use of superfine inorganic substances as defined by B) in claim 1 for increasing the X-ray contrast of thermoplastic moulding compositions comprising A) and B).

12. Thermoplastic moulding compositions according to claims 1 to 10, containing customary additives.

## Revendications

1. Matière à mouler thermoplastique consistant essentiellement en

A) un polymère thermoplastique choisi parmi

A.1) les copolymères du styrène, de l'α-méthylstyrène, d'un styrène substitué dans le noyau ou leurs mélanges (A.1.1) d'une part et de l'acrylonitrile, du méthacrylonitrile, du méthacrylate de méthyle, de l'anhydride maléique, d'un maléimide substitué à l'azote ou leurs mélanges (A.1.2) d'autre part,
A.2) un polymère greffé de

A.2.1 5 à 95 parties en poids d'un mélange de
A.2.1.1. 50 à 95 parties en poids de styrène, d'α-méthyl-styrène, de styrènes substitués dans le noyau par des halogènes ou des groupes méthyle, de méthacrylate de méthyle ou leurs mélanges et
A.2.1.1 5 à 50 parties en poids d'acrylonitrile, de méthacrylonitrile, de méthacrylate de méthyle, d'anhydride maléique, de maléimides substitués à l'azote par des groupes alkyle en $C_1$-$C_4$ ou phényle, ou leurs mélanges, sur
A.2.2 5 à 95 parties en poids d'un polymère du type caoutchouc à une température de transition du second ordre de -10°C,

ou des mélanges de A.1) et de A.2), et le cas échéant d'un polycarbonate thermoplastique,
et

B) 0,1 à 50 % en poids (par rapport à A), d'une substance minérale à un diamètre de particule moyen de 0,1 à 100 nm,
choisie parmi $BaSO_4$, TiN, $TiO_2$, TaC, SiC, WC, $WO_3$, $ZrO_2$ et les oxydes de fer, leurs mélanges ou des composés dopés.

2. Matière à mouler thermoplastique selon la revendication 1, dans laquelle le composant A.1 est un copolymère de 50 à 98 % en poids de styrène, d'α-méthylstyrène, d'un styrène substitué dans le noyau, de méthacrylate de méthyle ou leurs mélanges et de 50 à 2 % en poids d'acrylonitrile, de méthacrylonitrile, de méthacrylate de méthyle, d'anhydride maléique, d'un maléimide substitué à l'azote ou leurs mélanges.

3. Matière à mouler selon la revendication 1 ou 2, dans laquelle le polymère du type caoutchouc A.2.2 est choisi parmi le polybutadiène, les copolymères butadiène/styrène, les caoutchoucs d'acrylates et les caoutchoucs de silicones.

4. Matière à mouler selon les revendications 1 à 3, contenant 0,1 à 30 % en poids, par rapport à A), du composant B.

5. Matière à mouler selon les revendications 1 à 4, dans laquelle le diamètre de particule moyen du composant B va de 0,1 à 50 nm.

6. Matière à mouler selon la revendication 5, dans laquelle le diamètre de particule moyen va de 0,1 à 30 nm.

7. Matière à mouler selon les revendications 1 à 6, dans laquelle le composant B est choisi parmi le sulfate de baryum, le dioxyde de titane ou le dioxyde de zirconium.

8. Matières à mouler thermoplastiques selon les revendications 1 à 7, dans lesquelles le composant B est $BaSO_4$.

9. Matières à mouler thermoplastiques selon la revendication 1, dans lesquelles A) est un mélange d'un polycarbonate thermoplastique, d'un copolymère et d'un polymère greffé de monomères vinyliques formant des résines sur un caoutchouc.

10. Procédé de préparation des matières à mouler thermoplastiques selon la revendication 1, **caractérisé en ce que** l'on prépare la matière minérale à un diamètre de particule moyen de 0,1 à 100 nm en présence d'un latex du polymère thermoplastique et on les façonne ensemble.

11. Utilisation de substances minérales à l'état de particules extrêmement fines selon B) de la revendication 1 pour accroître le contraste aux rayons X de matières à mouler thermoplastiques consistant en A) et B).

12. Matières à mouler thermoplastiques selon les revendications 1 à 10, contenant des additifs usuels.